# EUROPEAN PATENT APPLICATION

(11) **EP 2 592 306 A2**
(43) Date of publication of application: **15.05.2013**
(21) Application number: 12191176.2
(22) Date of filing: 03.11.2012
(51) Int. Cl.: F16H 61/32, F16H 63/30

(54) **Transmission actuating device**

(30) Priority: 08.11.2011 JP 2011244478
(71) Applicant: JTEKT CORPORATION, Osaka-shi Osaka 542-8502 (JP)
(72) Inventor: Uemoto, Takafumi, Osaka-shi,, Osaka 542-8502 (JP)
(74) Representative: Winter, Brandl, Fürniss, Hübner, Röss, Kaiser, Polte - Partnerschaft

(57) **Abstract**

A shift operation mechanism of a transmission includes a plurality of fork shafts. Shift heads that are driven by a transmission actuating device are fixed in middle portions of the respective fork shafts. The transmission actuating device includes a shift select shaft that rotates about its axis to cause the internal lever to perform a shift operation and that moves in its axial direction to cause the internal lever to perform a select operation.

On the basis of a rotation angular amount of the shift select shaft during a select operation of the internal lever, set positional data corresponding to each shift head, stored in a positional data storage unit, is corrected.

## Description

### BACKGROUND OF THE INVENTION

### 1. Field of the Invention

The invention relates to a transmission actuating device used to actuate a transmission.

### 2. Description of Related Art

There is a conventional gear-shifting apparatus of an automated manual transmission that is a manual transmission in which gearshift is performed without depressing a clutch pedal. The above-described gear-shifting apparatus includes a transmission actuating device that shifts the gear of a transmission. For example, Japanese Patent Application Publication No. 2011-75097 (JP 2011-75097 A) describes a shift/select actuating device as an example of the transmission actuating device. The shift/select actuating device rotates a shift select shaft, a shift lever being fixed to a middle portion of the shift select shaft, about its axis by rotational driving force of a single electric motor to perform a shift operation, or moves the shift select shaft in its axial direction by the rotational driving force of the electric motor. The shift/select actuating device includes a first conversion mechanism, a second conversion mechanism, a shift electromagnetic clutch and a select electromagnetic clutch. The first conversion mechanism converts the rotational driving force of the electric motor into force for rotating the shift select shaft. The second conversion mechanism converts the rotational driving force into force for axially moving the shift select shaft. The shift electromagnetic clutch is able to allow or interrupt transmission of the rotational driving force from the electric motor to the first conversion mechanism. The select electromagnetic clutch is able to allow or interrupt transmission of the rotational driving force from the electric motor to the second conversion mechanism.

In the electric actuator described in JP 2011-75097 A, when the shift lever is caused to perform a shift operation, the shift electromagnetic clutch is engaged, and the select electromagnetic clutch is disengaged. On the other hand, when the shift lever is caused to perform a select operation, the shift electromagnetic clutch is disengaged, and the select electromagnetic clutch is engaged. That is, by selectively switching the engaged electromagnetic clutch, between the shift electromagnetic clutch and the select electromagnetic clutch, the destination to which the power of the electric motor is transmitted is switched between the shift driving mechanism and the select driving mechanism.

In the transmission, a shift operation mechanism operated by the shift lever includes a plurality of fork shafts, shift heads and an engaging groove. The shift heads are fixed to the respective fork shafts. The engaging groove is formed over the shift heads. The engaging groove accommodates the distal end portion of the shift lever and is engaged with the distal end portion. When the shift lever performs a select operation, the electric actuator is driven to move the shift select shaft in its axial direction with the shift heads set at neutral positions. At this time, in accordance with the axial movement of the shift select shaft, the distal end portion of the shift lever moves through the engaging groove, and the shift head with which the distal end portion is engaged is changed (selected) to the shift head different from the shift head with which the distal end portion has been engaged.

On the other hand, when the shift lever performs a shift operation, the electric actuator is driven to rotate the shift select shaft. At this time, in accordance with the rotation of the shift select shaft, the distal end portion of the shift head, which is engaged with the shift lever, is moved toward one side in the axial direction together with the corresponding fork shaft. At this time, the shift lever is moved on the basis of positional data about shift positions and the neutral positions that are stored in a storage unit.

However, the neutral positions of the shift heads may deviate from predetermined positions due to temperature changes, aged deterioration, and other factors. At this time, although neutral positions of the shift lever and the shift heads actually deviate from the predetermined positions, the shift lever and the shift heads are controlled on the assumption that the neutral positions are the predetermined positions. Therefore, there is a possibility that the shift lever after a shift operation will not reach a predetermined shift position or will pass through the predetermined shift position. That is, there is a possibility that the amount of shift operation will be insufficient or excessive, and the gearshift will not be performed appropriately.

### SUMMARY OF THE INVENTION

It is an object of the invention to provide a transmission actuating device that is able to cause a shift lever to perform a shift operation appropriately even if a positional deviation of a shift head of a transmission occurs.

An aspect of the invention relates to a transmission actuating device that actuates a transmission that includes a plurality of fork shafts and shift heads fixed to the respective fork shafts. The transmission actuating device includes: a shift select shaft that is a columnar member to which a shift lever that is engaged with any one of the shift heads is coupled, that rotates about an axis of the shift select shaft to cause the shift lever to perform a shift operation, and that moves in an axial direction of the shift select shaft to cause the shift lever to perform a select operation; a single electric motor that generates rotational driving force; a shift driving mechanism that rotates the shift select shaft about the axis upon receiving the rotational driving force from the electric motor; a select driving mechanism that moves the shift select shaft in the axial direction upon receiving the rotational driving force from the electric motor; a clutch mechanism that selectively changes a member, to which the rotational driving force from the electric motor is transmitted, between the shift driving mechanism and the select driving mechanism; shaft rotation detecting means for detecting a rotation angle of the shift select shaft; positional information storage means for storing positional information at the time when the shift lever is engaged with each of the shift heads in association with a corresponding one of the shift heads; and positional information setting correction means for correcting the set positional information corresponding to each shift head, which is stored in the positional information storage means, based on a rotation angular amount of the shift select shaft during driving of the select driving mechanism.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic exploded perspective view of the configuration of part of a gear-shifting apparatus to which a transmission actuating device according to an embodiment of the invention is applied;
FIG. 2 is a view for illustrating a shift pattern of a shift operation mechanism shown in FIG. 1;
FIG. 3 is a perspective view that shows the configuration of the transmission actuating device shown in FIG. 1;
FIG. 4 is a sectional view that shows the configuration of the transmission actuating device shown in FIG. 1;
FIG. 5A is a sectional view taken along the line V-V in FIG. 4;
FIG. 5B is a block diagram that shows the electrical configuration of the transmission actuating device shown in FIG. 1;
FIG. 6 is a flowchart that shows gear shift operation control for downshifting from first gear to reverse gear;
FIG. 7A is a view that shows a first state of engagement between an internal lever and shift heads when downshifting from first gear to reverse gear is performed;
FIG. 7B is a view that shows a second state of engagement between the internal lever and the shift heads when downshifting from first gear to reverse gear is performed;
FIG. 7C is a view that shows a third state of engagement between the internal lever and the shift heads when downshifting from first gear to reverse gear is performed;
FIG. 7D is a view that shows a fourth state of engagement between the internal lever and the shift heads when downshifting from first gear to reverse gear is performed;
FIG. 8 is a flowchart that shows gear shift operation control for a select operation (N2 → N1) shown in FIG. 6; and
FIG. 9 is a flowchart that shows gear shift operation control for a shift operation (N1 → R) shown in FIG. 6.

### DETAILED DESCRIPTION OF EMBODIMENTS

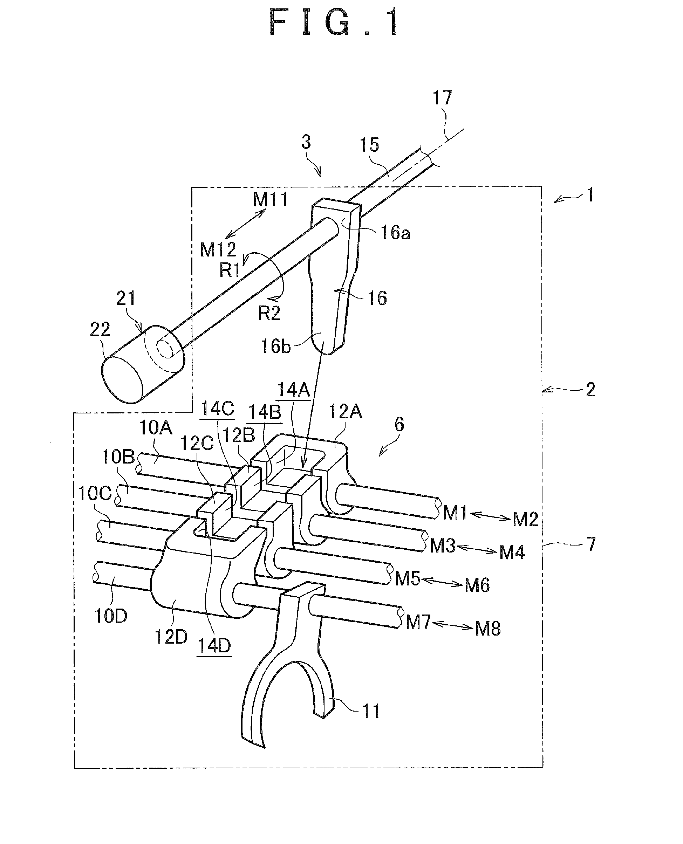

Hereinafter, an embodiment of the invention will be described in detail with reference to the accompanying drawings. FIG. 1 is a schematic exploded perspective view of the configuration of part of a gear-shifting apparatus 1 to which a transmission actuating device 3 according to the embodiment of the invention is applied. The gear-shifting apparatus 1 includes a transmission 2 and the transmission actuating device 3 that actuates the transmission 2 to shift gears. The transmission 2 includes a power transmission device (not shown), a shift operation mechanism 6 and a gear housing 7. The power transmission device is formed of a known constant-mesh parallel-shaft gear power transmission device. The shift operation mechanism 6 changes the power transmission path of the power transmission device among a plurality of power transmission paths. The gear housing 7 accommodates the power transmission device and the shift operation mechanism 6. The gear-shifting apparatus 1 that includes the transmission 2 is mounted in a vehicle, such as a passenger automobile or a truck. By changing the power transmission path in the power transmission device, it is possible to change the power transmission ratio.

The shift operation mechanism 6 is accommodated in the gear housing 7, and includes a plurality of fork shafts 10A, 10B, 10C, 10D that extend parallel to each other. The fork shaft 10A is provided so as to be movable in axial directions M1, M2. The fork shaft 10B is provided so as to be movable in axial directions M3, M4. The fork shaft 10C is provided so as to be movable in axial directions M5, M6. The fork shaft 10D is provided so as to be movable in axial directions M7, M8. The axial directions M1, M3, M5, M7 are oriented in the same direction and are parallel to each other. The axial directions M2, M4, M6, M8 are oriented in a direction opposite to the axial directions M1, M3, M5, M7.

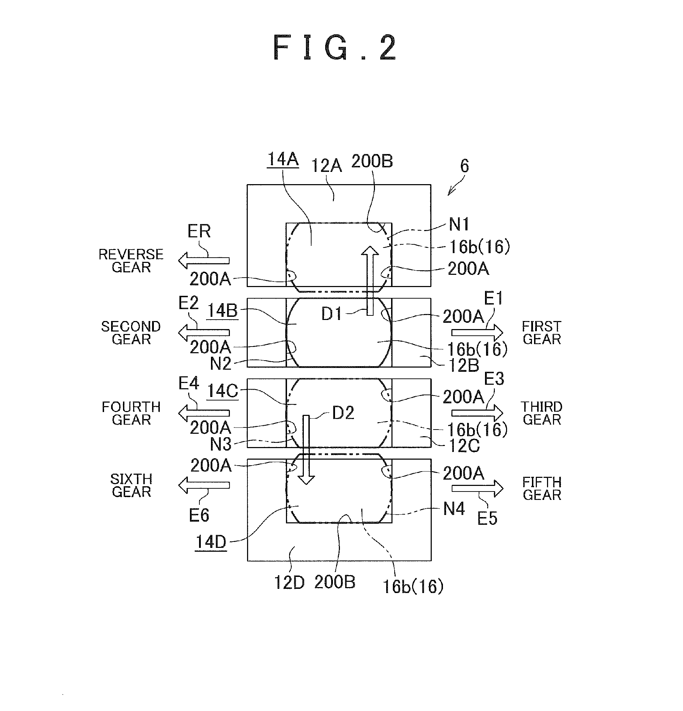

The fork shafts 10A, 10B, 10C, 10D are arranged parallel to each other so as to be aligned on a straight line when viewed from the axial directions M1, M3, M5, M7 (M2, M4, M6, M8). Shift heads 12A, 12B, 12C, 12D are fixed to middle portions of the fork shafts 10A, 10B, 10C, 10D respectively. The shift heads 12A, 12B, 12C, 12D are actuated by the transmission actuating device 3. The shift heads 12A, 12B, 12C, 12D in their neutral positions are located at the same position in the axial directions M1, M3, M5, M7, and are provided so as to correspond to a plurality of select direction positions. The neutral positions are neutral positions N1, N2, N3, N4 (described later) (see FIG. 2). The select direction positions are positions in the up-down direction shown in FIG. 2. In the present embodiment, the select direction positions are four select direction positions, for example, a select direction position for fifth gear and sixth gear, a select direction position for third gear and fourth gear, a select direction position for first gear and second gear, and a select direction position for reverse gear. Each of the shift heads 12A, 12B, 12C, 12D has a facing surface that faces the transmission actuating device 3. The facing surfaces are flush with each other. Engaging grooves 14A, 14B, 14C, 14D are formed in the respective facing surfaces. Each of the engaging grooves 14A, 14B, 14C, 14D has inner walls 200A (see FIG. 2) that are perpendicular to direction along the axial directions M1 to M8 of the fork shafts 10A to 10D. In addition, each of the engagement grooves 14A, 14D located at respective ends has an inner wall 200B (see FIG. 2) that is perpendicular to the direction along the first and second axial directions M11, M12 of a shift select shaft 15, and that connects the ends of the side faces of a corresponding one of the engagement grooves 14A, 14D to each other. In other words, an engaging groove that extends over the four shift heads 12A, 12B, 12C, 12D is formed of the four engaging grooves 14A, 14B, 14C, 14D.

A distal end portion 16b of an internal lever (shift lever) 16 enters one of the engaging grooves 14A, 14B, 14C, 14D. When the distal end portion 16b is pushed against (contacts) the inner walls 200A and the inner wall 200B of one of the engagement recesses 14A, 14D, the distal end portion 16b is engaged with a corresponding one of the shift heads 12A, 12D. When the distal end portion 16b is pushed against (contacts) the inner walls 200A of one of the engagement recesses 14B, 14C, the distal end portion 16b is engaged with a corresponding one of the shift head 12B, 14C. The distal end portion 16b of the internal lever 16 is able to move between engagement positions, at which the distal end portion 16b is engaged with the respective shift heads 12A, 12B, 12C, 12D, through an internal space of the engagement recesses 14A, 14B, 14C, 14D.

In addition, a shift fork 11 is fixed to each of the fork shafts 10A, 10B, 10C, 10D. Each shift fork 11 is engaged with a corresponding operated member that is operated to change the power transmission path of the power transmission device. The operated members (not shown) include, for example, a clutch sleeve and a synchronizer mechanism. In FIG. 1, only the shift fork 11 provided on the fork shaft 10D is shown. Through movement of each shift fork 11 in a corresponding one of the axial directions M1 to M8, the shift fork 11 is engaged with the corresponding operated member to actuate the operated member.

The transmission actuating device 3 includes the columnar shift select shaft 15 and an electric actuator 21. The shift select shaft 15 causes the shift operation mechanism 6 to perform a shift operation and a select operation. The electric actuator 21 is used as a rotary driving source for causing the shift select shaft 15 to perform a shift operation and a select operation. The shift select shaft 15 has a central axis 17. The shift select shaft 15 is supported by the gear housing 7 so as to be rotatable about the axis (that is, the central axis 17) of the shift select shaft 15 in a first rotation direction R1 or a second rotation direction R2 and movable in the first axial direction M11 or the second axial direction M12. The shift select shaft 15 is arranged so as to be neither parallel to nor intersecting with each of the fork shafts 10A, 10B, 10C, 10D and the shift select shaft 15 and each of the fork shafts 10A, 10B, 10C, 10D form an angle of 90 degrees when viewed from above. The second rotation direction R2 is a rotation direction opposite to the first rotation direction R1. The second axial direction M12 is an axial direction opposite to the first axial direction M11.

A base end portion 16a of the internal lever 16 accommodated in the gear housing 7 is fixed to a middle portion of the shift select shaft 15. The internal lever 16 rotates together with the shift select shaft 15 about the central axis 17 of the shift select shaft 15. The distal end portion (left end portion in FIG. 1) of the shift select shaft 15 protrudes outward from the gear housing 7. When the shift select shaft 15 is moved in the first axial direction M11 by the electric actuator 21, the internal lever 16 is moved in the first axial direction M11. On the other hand, when the shift select shaft 15 is moved in the second axial direction M12 by the electric actuator 21, the internal lever 16 is moved in the second axial direction M12. The distal end portion 16b of the internal lever 16 is engaged with a selected one of the shift heads 12A, 12B, 12C, 12D, at the corresponding select direction position. In this way, a select operation is completed.

When the shift select shaft 15 is rotated in the first rotation direction R1 by the electric actuator 21, the internal lever 16 is pivoted in the first rotation direction R1 about the shift select shaft 15. On the other hand, when the shift select shaft 15 is rotated in the second rotation direction R2 by the electric actuator 21, the internal lever 16 is pivoted in the second rotation direction R2 about the shift select shaft 15. As a result, one of the shift heads 12A, 12B, 12C, 12D which has been engaged with the internal lever 16, moves in one of the axial directions M1 to M8 of a corresponding one of the fork shafts 10A, 10B, 10C, 10D. In this way, a shift operation is completed.

FIG. 2 is a view for illustrating a shift pattern of the shift operation mechanism 6. Shift direction positions when the fork shafts 10A to 10D that correspond to the shift heads 12A to 12D, engaged with the internal lever 16, are not axially moved from predetermined reference positions (neutral positions) are referred to as neutral positions N1, N2, N3, N4. The first neutral position N1 is a neutral position at which the distal end portion 16b of the internal lever 16 is engaged with the shift head 12A. The second neutral position N2 is a neutral position at which the distal end portion 16b of the internal lever 16 is engaged with the shift head 12B. The third neutral position N3 is a neutral position at which the distal end portion 16b of the internal lever 16 is engaged with the shift head 12C. The fourth neutral position N4 is a neutral position at which the distal end portion 16b of the internal lever 16 is engaged with the shift head 12D. When the distal end portion 16b of the internal lever 16 is at one of the neutral positions N1, N2, N3, N4, an output gear is in a neutral state, and the shift fork 11 that corresponds to one of the shift heads 12A, 12B, 12C, 12D, which is engaged with the distal end portion 16b of the internal lever 16, is not engaged with the operated member.

When the internal lever 16 is at the second neutral position N2, if the electric actuator 21 is driven and the shift select shaft 15 is moved in the axial direction M11, the internal lever 16 moves in the direction of an outline arrow D1 in FIG. 2 and then the internal lever 16 is guided to the first neutral position N1. When the internal lever 16 is at the second neutral position N2, if the electric actuator 21 is driven and the shift select shaft 15 is moved in the axial direction M12, the internal lever 16 moves in the direction of an outline arrow D2 in FIG. 2 and then the internal lever 16 is guided to the third neutral position N3.

When the internal lever 16 (distal end portion 16b) is at the third neutral position N3, if the electric actuator 21 is driven and the shift select shaft 15 is moved in the axial direction M11, the internal lever 16 moves in the direction of the outline arrow D1 in FIG. 2 and then the internal lever 16 is guided to the second neutral position N2. When the internal lever 16 is at the third neutral position N3, if the electric actuator 21 is driven and the shift select shaft 15 is moved in the axial direction M12, the internal lever 16 moves in the direction of the outline arrow D2 in FIG. 2 and then the internal lever 16 is guided to the fourth neutral position N4.

As shown in FIG. 2, the first neutral position N1 and a reverse-gear shift position both are arranged at a first select direction position (the uppermost select direction position shown in FIG. 2), and are located at the same position in a select direction. A first-gear shift position, the second neutral position N2 and a second-gear shift position all are arranged at a second select direction position (the second select direction position from the top shown in FIG. 2), and are located at the same position in the select direction. A third-gear shift position, the third neutral position N3 and a fourth-gear shift position all are arranged at a third select direction position (the third select direction position from the top shown in FIG. 2), and are located at the same position in the select direction. A fifth-gear shift position, the fourth neutral position N4 and a sixth-gear shift position all are arranged at a fourth select direction position (the lowermost select direction position shown in FIG. 2), and are located at the same position in the select direction.

The reverse-gear shift position, the second-gear shift position, the fourth-gear shift position and the sixth-gear shift position all are arranged at a first shift direction position (left-side shift direction position in FIG. 2), and are located at the same position in a shift direction. These shift positions are located on accelerating sides (directions indicated by outline arrows ER, E2, E4, E6 in FIG. 2) with respect to the neutral positions N1, N2, N3, N4. The first-gear shift position, the third-gear shift position and the fifth-gear shift position all are arranged at a second shift direction position (right-side shift direction position in FIG. 2), and are located at the same position in the shift direction. These shift positions are located on decelerating sides (directions indicated by outline arrows E1, E3, E5 in FIG. 2) with respect to the neutral positions N1, N2, N3, N4.

As shown in FIG. 2, when the reverse gear is selected, the distal end portion 16b of the internal lever 16 is at the reverse-gear shift position ("reverse gear" in FIG. 2) in FIG. 2. At this time, the corresponding operated member is in mesh with the reverse output gear of the power transmission device. Thus, the output gear is set at reverse gear. When the internal lever 16 is at the reverse-gear shift position, the distal end portion 16b of the internal lever 16 is engaged with the shift head 12A, and the distal end portion 16b together with the shift head 12A has been moved in the axial direction M1 (moved in the direction of the outline arrow ER in FIG. 2) from the first neutral position N1 to the first shift direction position (the left-side shift direction position shown in FIG. 2).

When first gear is selected, the distal end portion 16b of the internal lever 16 is at the first-gear shift position ("first gear" in FIG. 2) in FIG. 2. At this time, the corresponding operated member is in mesh with the first-gear output gear of the power transmission device. Thus, the output gear is set at first gear. When the internal lever 16 is at the first-gear shift position, the distal end portion 16b of the internal lever 16 is engaged with the shift head 12B, and the distal end portion 16b together with the shift head 12B has been moved in the axial direction M4 (moved in the direction of the outline arrow E1 in FIG. 2) from the second neutral position N2 to the second shift direction position (the right-side shift direction position in FIG. 2).

As shown in FIG. 2, when second gear is selected, the distal end portion 16b of the internal lever 16 is at the second-gear shift position ("second gear" in FIG. 2) in FIG. 2. At this time, the corresponding operated member is in mesh with the second-gear output gear of the power transmission device. Thus, the output gear is set at second gear. When the internal lever 16 is at the second-gear shift position, the distal end portion 16b of the internal lever 16 is engaged with the shift head 12B, and the distal end portion 16b together with the shift head 12B has been moved in the axial direction M3 (moved in the direction of the outline arrow E2 in FIG. 2) from the second neutral position N2 to the first shift direction position (the left-side shift direction position in FIG. 2).

When third gear is selected, the distal end portion 16b of the internal lever 16 is at the third-gear shift position ("third gear" in FIG. 2) in FIG. 2. At this time, the corresponding operated member is in mesh with the third-gear output gear of the power transmission device. Thus, the output gear is set at third gear. When the internal lever 16 is at the third-gear shift position, the distal end portion 16b of the internal lever 16 is engaged with the shift head 12C, and the distal end portion 16b together with the shift head 12C has been moved in the axial direction M6 (moved in the direction of the outline arrow E3 in FIG. 2) from the third neutral position N3 to the second shift direction position (the right-side shift direction position in FIG. 2).

When fourth gear is selected, the distal end portion 16b of the internal lever 16 is at the fourth-gear shift position ("fourth gear" in FIG. 2) in FIG. 2. At this time, the corresponding operated member is in mesh with the fourth-gear output gear of the power transmission device. Thus, the output gear is set at fourth gear. When the internal lever 16 is at the fourth-gear shift position, the distal end portion 16b of the internal lever 16 is engaged with the shift head 12C, and the distal end portion 16b together with the shift head 12C has been moved in the axial direction M5 (moved in the direction of the outline arrow E4 in FIG. 2) from the third neutral position N3 to the first shift direction position (the left-side shift direction position in FIG. 2).

When fifth gear is selected, the distal end portion 16b of the internal lever 16 is at the fifth-gear shift position ("fifth gear" in FIG. 2) in FIG. 2. At this time, the corresponding operated member is in mesh with the fifth-gear output gear of the power transmission device. Thus, the output gear is set at fifth gear. When the internal lever 16 is at the fifth-gear shift position, the distal end portion 16b of the internal lever 16 is engaged with the shift head 12D, and the distal end portion 16b together with the shift head 12D has been moved in the axial direction M8 (moved in the direction of the outline arrow E5 in FIG. 2) from the fourth neutral position N4 to the second shift direction position (the right-side shift direction position in FIG. 2).

When sixth gear is selected, the distal end portion 16b of the internal lever 16 is at the sixth-gear shift position ("sixth gear" in FIG. 2) in FIG. 2. At this time, the corresponding operated member is in mesh with the sixth-gear output gear of the power transmission device. Thus, the output gear is set at sixth gear. When the internal lever 16 is at the sixth-gear shift position, the distal end portion 16b of the internal lever 16 is engaged with the shift head 12D, and the distal end portion 16b together with the shift head 12D has been moved in the axial direction M7 (moved in the direction of the outline arrow E6 in FIG. 2) from the fourth neutral position N4 to the first shift direction position (the left-side shift direction position in FIG. 2).

Next, gearshift to reverse gear will be described with reference to FIG. 1 and FIG. 2. When gearshift from the second neutral position N2 to reverse gear is performed, in a state where the distal end portion 16b of the internal lever 16 is at the second neutral position N2, the electric actuator 21 is driven to move the shift select shaft 15 in its axial direction M11 (in the direction of the outline arrow D1 in FIG. 2). Thus, the internal lever 16 moves in the axial direction M11, and the distal end portion 16b of the internal lever 16 is engaged with the shift head 12A (the distal end portion 16b of the internal lever 16 is located at the first neutral position N1). Subsequently, the electric actuator 21 is driven to rotate the shift select shaft 15 in the rotation direction R2, and, accordingly, the internal lever 16 pivots about the shift select shaft 15, and the shift head 12A and the fork shaft 10A are moved in the axial direction M1 (the direction of the outline arrow ER in FIG. 2). The electric actuator 21 is continuously driven until the distal end portion 16b of the internal lever 16 reaches the reverse-gear shift position. As a result, gearshift to reverse gear is completed.

When gearshift out of reverse gear is performed, in a state where the distal end portion 16b of the internal lever 16 is at the reverse-gear shift position, the electric actuator 21 is driven to pivot the internal lever 16 in the rotation direction R1 about the shift select shaft 15. Thus, the shift head 12A and the fork shaft 10A are moved in the axial direction M2 (direction opposite to the direction of the outline arrow ER in FIG. 2), and the distal end portion 16b of the internal lever 16 is located at the first neutral position N1. Subsequently, the electric actuator 21 is driven to move the shift select shaft 15 in its axial direction M12 (in the direction of the outline arrow D2 in FIG. 2). Thus, the internal lever 16 moves in the axial direction M12, and the distal end portion 16b of the internal lever 16 is engaged with the shift head 12B (the distal end portion 16b of the internal lever 16 is located at the second neutral position N2).

Next, upshifting from first gear to second gear, from second gear to third gear, from third gear to fourth gear, from fourth gear to fifth gear, and from fifth gear to sixth gear will be described. First, gearshift from the second neutral position N2 into first gear will be described. In a state where the distal end portion 16b of the internal lever 16 is at the second neutral position N2, the electric actuator 21 is driven to pivot the internal lever 16 in the rotation direction R1 about the shift select shaft 15. Thus, the shift head 12B and the fork shaft 10B are moved in the axial direction M4 (the direction of the outline arrow E1 in FIG. 2). The electric actuator 21 is continuously driven until the distal end portion 16b of the internal lever 16 reaches the first-gear shift position. As a result, gearshift to first gear is completed.

Next, gearshift from first gear to second gear will be described. In a state where the distal end portion 16b of the internal lever 16 is at the first-gear shift position, the electric actuator 21 is driven to pivot the internal lever 16 in the rotation direction R2 about the shift select shaft 15. Thus, the shift head 12B and the fork shaft 10B are moved in the axial direction M3 (the direction of the outline arrow E2 in FIG. 2). The distal end portion 16b of the internal lever 16 is moved toward the second-gear shift position via the second neutral position N2. The electric actuator 21 is continuously driven until the distal end portion 16b reaches the second-gear shift position. As a result, gearshift to second gear is completed.

Next, gearshift from second gear to third gear will be described. In a state where the distal end portion 16b of the internal lever 16 is at the second-gear shift position, the electric actuator 21 is driven to pivot the internal lever 16 in the rotation direction R1 about the shift select shaft 15. Thus, the shift head 12B and the fork shaft 10B are moved in the axial direction M4 (the direction of the outline arrow E1 in FIG. 2), and the distal end portion 16b of the internal lever 16 is located at the second neutral position N2. Subsequently, the electric actuator 21 is driven to move the shift select shaft 15 in its axial direction M12 (the direction of the outline arrow D2 in FIG. 2). Thus, the internal lever 16 is moved in the axial direction M12, disengaged from the shift head 12B, and engaged with the shift head 12C (the internal lever 16 is located at the third neutral position N3). Subsequently, the electric actuator 21 is driven to rotate the shift select shaft 15 in the rotation direction R1. In accordance with the rotation of the shift select shaft 15, the internal lever 16 is pivoted about the shift select shaft 15. Thus, the shift head 12C and the fork shaft 10C are moved in the axial direction M6 (the direction of the outline arrow E3 in FIG. 2). The electric actuator 21 is continuously driven until the distal end portion 16b of the internal lever 16 reaches the third-gear shift position. As a result, gearshift to third gear is completed.

Next, gearshift from third gear to fourth gear will be described. In a state where the distal end portion 16b of the internal lever 16 is at the third-gear shift position, the electric actuator 21 is driven to pivot the internal lever 16 in the rotation direction R2 about the shift select shaft 15. Thus, the shift head 12C and the fork shaft 10C are moved in the axial direction M5 (the direction of the outline arrow E4 in FIG. 2). The distal end portion 16b of the internal lever 16 is moved toward the fourth-gear shift position via the third neutral position N3. Thus, the electric actuator 21 is continuously driven until the distal end portion 16b reaches the fourth-gear shift position. As a result, gearshift to fourth gear is completed.

Next, gearshift from fourth gear to fifth gear will be described. In a state where the distal end portion 16b of the internal lever 16 is at the fourth-gear shift position, the electric actuator 21 is driven to pivot the internal lever 16 in the rotation direction R1 about the shift select shaft 15. Thus, the shift head 12C and the fork shaft 10C are moved in the axial direction M6 (the direction of the outline arrow E3 in FIG. 2), and the distal end portion 16b of the internal lever 16 is located at the third neutral position N3. Subsequently, the electric actuator 21 is driven to move the shift select shaft 15 in its axial direction M12 (the direction of the outline arrow D2 in FIG. 2). Thus, the internal lever 16 is moved in the axial direction M12, disengaged from the shift head 12C, and engaged with the shift head 12D (the internal lever 16 is located at the fourth neutral position N4). Subsequently, the electric actuator 21 is driven to rotate the shift select shaft 15 in the rotation direction R1. In accordance with the rotation of the shift select shaft 15, the internal lever 16 is pivoted about the shift select shaft 15. Thus, the shift head 12D and the fork shaft 10D are moved in the axial direction M8 (the direction of the outline arrow E5 in FIG. 2). The electric actuator 21 is continuously driven until the distal end portion 16b of the internal lever 16 reaches the fifth-gear shift position. As a result, gearshift to fifth gear is completed.

Next, gearshift from fifth gear to sixth gear will be described. In a state where the distal end portion 16b of the internal lever 16 is at the fifth-gear shift position, the electric actuator 21 is driven to pivot the internal lever 16 in the rotation direction R2 about the shift select shaft 15. Thus, the shift head 12D and the fork shaft 10D are moved in the axial direction M7 (the direction of the outline arrow E6 in FIG. 2). The distal end portion 16b of the internal lever 16 is moved toward the sixth-gear shift position via the fourth neutral position N4. Thus, the electric actuator 21 is continuously driven until the distal end portion 16b reaches the sixth-gear shift position. As a result, gearshift to sixth gear is completed.

Next, downshifting from sixth gear to fifth gear, from fifth gear to fourth gear, from fourth gear to third gear, from third gear to second gear, and from second gear to first gear will be described with reference to FIG. 1 and FIG. 2. First, gearshift from sixth gear to fifth gear will be described. In a state where the distal end portion 16b of the internal lever 16 is at the sixth-gear shift position, the electric actuator 21 is driven to pivot the internal lever 16 in the rotation direction R1 about the shift select shaft 15. Thus, the shift head 12D and the fork shaft 10D are moved in the axial direction M8 (the direction of the outline arrow E5 in FIG. 2). Thus, the distal end portion 16b of the internal lever 16 is moved toward the fifth-gear shift position via the fourth neutral position N4. The electric actuator 21 is continuously driven until the distal end portion 16b reaches the fifth-gear shift position. As a result, gearshift to fifth gear is completed.

Next, gearshift from fifth gear to fourth gear will be described. In a state where the distal end portion 16b of the internal lever 16 is at the fifth-gear shift position, the electric actuator 21 is driven to pivot the internal lever 16 in the rotation direction R2 about the shift select shaft 15. Thus, the shift head 12D and the fork shaft 10D are moved in the axial direction M7 (the direction of the outline arrow E6 in FIG. 2), and the distal end portion 16b of the internal lever 16 is located at the fourth neutral position N4. Subsequently, the electric actuator 21 is driven to move the shift select shaft 15 in its axial direction M11 (the direction of the outline arrow D1 in FIG. 2). Thus, the internal lever 16 is moved in the axial direction M11, disengaged from the shift head 12D, and engaged with the shift head 12C (the internal lever 16 is located at the third neutral position N3). Subsequently, the electric actuator 21 is driven to rotate the shift select shaft 15 in the rotation direction R2. In accordance with the rotation of the shift select shaft 15, the internal lever 16 is pivoted about the shift select shaft 15 to move the shift head 12C and the fork shaft 10C in the axial direction M5 (the direction of the outline arrow E4 in FIG. 2). The electric actuator 21 is continuously driven until the distal end portion 16b of the internal lever 16 reaches the fourth-gear shift position. As a result, gearshift to fourth gear is completed.

Next, gearshift from fourth gear to third gear will be described. In a state where the distal end portion 16b of the internal lever 16 is at the fourth-gear shift position, the electric actuator 21 is driven to pivot the internal lever 16 in the rotation direction R1 about the shift select shaft 15. Thus, the shift head 12C and the fork shaft 10C are moved in the axial direction M6 (the direction of the outline arrow E3 in FIG. 2). Thus, the distal end portion 16b of the internal lever 16 is moved toward the third-gear shift position via the third neutral position N3. The electric actuator 21 is continuously driven until the distal end portion 16b reaches the third-gear shift position. As a result, gearshift to third gear is completed.

Next, gearshift from third gear to second gear will be described. In a state where the distal end portion 16b of the internal lever 16 is at the third-gear shift position, the electric actuator 21 is driven to pivot the internal lever 16 in the rotation direction R2 about the shift select shaft 15. Thus, the shift head 12C and the fork shaft 10C are moved in the axial direction M5 (the direction of the outline arrow E4 in FIG. 2), and the distal end portion 16b of the internal lever 16 is located at the third neutral position N3. Subsequently, the electric actuator 21 is driven to move the shift select shaft 15 in its axial direction M11 (the direction of the outline arrow D1 in FIG. 2). Thus, the internal lever 16 is moved in the axial direction M11, disengaged from the shift head 12C, and engaged with the shift head 12B (the internal lever 16 is located at the second neutral position N2). Subsequently, the electric actuator 21 is driven to rotate the shift select shaft 15 in the rotation direction R2. In accordance with the rotation of the shift select shaft 15, the internal lever 16 is pivoted about the shift select shaft 15 to move the shift head 12B and the fork shaft 10B in the axial direction M3 (the direction of the outline arrow E2 in FIG. 2). The electric actuator 21 is continuously driven until the distal end portion 16b of the internal lever 16 reaches the second-gear shift position. As a result, gearshift to second gear is completed.

Next, gearshift from second gear to first gear will be described. In a state where the distal end portion 16b of the internal lever 16 is at the second-gear shift position, the electric actuator 21 is driven to pivot the internal lever 16 in the rotation direction R1 about the shift select shaft 15. Thus, the shift head 12B and the fork shaft 10B are moved in the axial direction M4 (the direction of the outline arrow E1 in FIG. 2). Thus, the distal end portion 16b of the internal lever 16 is moved toward the first-gear shift position via the second neutral position N2. The electric actuator 21 is continuously driven until the distal end portion 16b reaches the first-gear shift position. As a result, gearshift to first gear is completed.

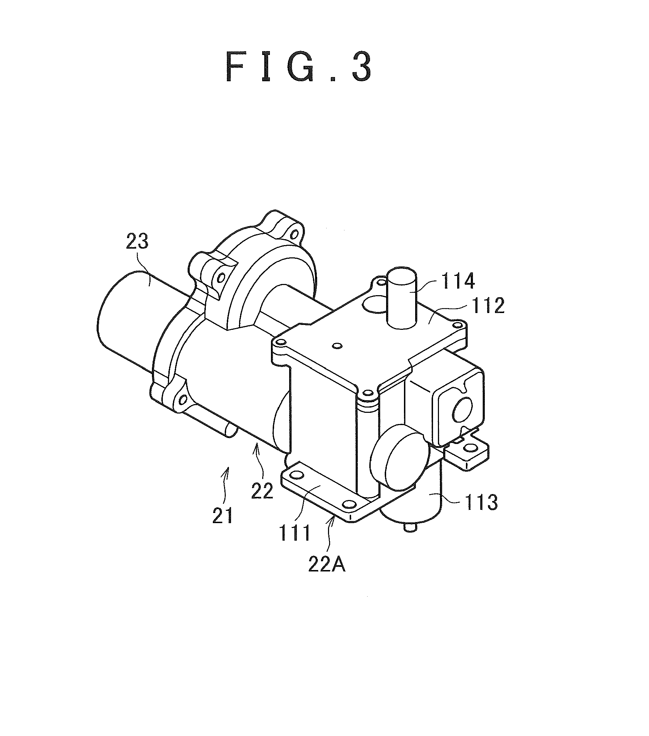

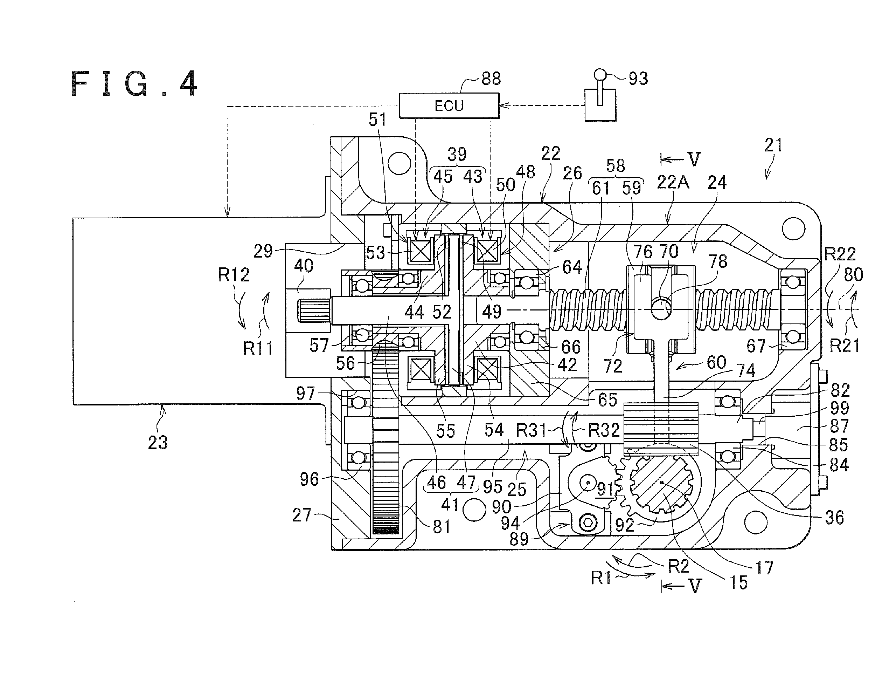

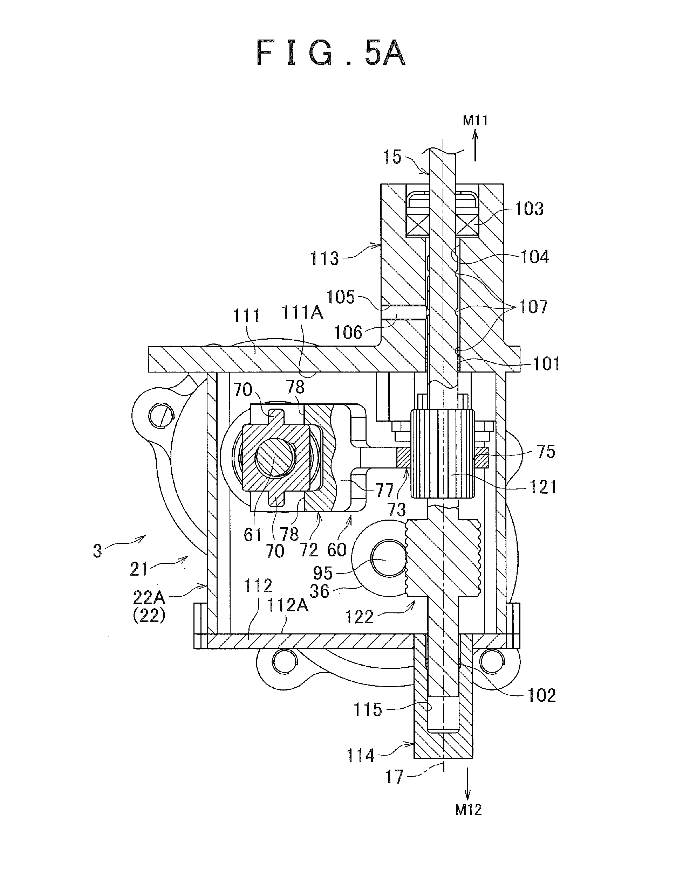

FIG. 3 is a perspective view that shows the configuration of the electric actuator 21. FIG. 4 is a sectional view that shows the configuration of the electric actuator 21. FIG. 5A is a sectional view taken along the line V-V in FIG. 4. Note that, in FIG. 3, the shift select shaft 15 is not shown. Hereinafter, the configuration of the electric actuator 21 will be described with reference to FIG. 3, FIG. 4 and FIG. 5A. The electric actuator 21 includes a closed-end substantially cylindrical housing 22. The electric actuator 21 is fixed to the outer surface of the gear housing 7 (see FIG. 1) or a predetermined portion of the vehicle.

The electric actuator 21 includes an electric motor 23, a shift conversion mechanism (shift driving mechanism) 24, a select conversion mechanism (select driving mechanism) 25, and a switching unit 26. The electric motor 23 is, for example, a brushless electric motor. The shift conversion mechanism 24 converts rotary torque (rotational driving force), generated by the electric motor 23, into force that rotates the shift select shaft 15 about its axis. The select conversion mechanism 25 converts rotary torque, generated by the electric motor 23, into force that moves the shift select shaft 15 in the first axial direction M11 or the second axial direction M12. The switching unit 26 allows or interrupts transmission of rotary torque, generated by the electric motor 23, to the shift conversion mechanism 24 and/or the select conversion mechanism 25. The shift conversion mechanism 24, the select conversion mechanism 25 and the switching unit 26 are accommodated in the housing 22.

An opening portion (left side shown in FIG. 4) of the housing 22 is closed by a substantially plate-like lid 27. The housing 22 and the lid 27 each are made of a metal material, such as casting iron and aluminum. The outer periphery of the lid 27 is fitted to the opening portion of the housing 22. A circular through-hole 29 is formed in the lid 27. The through-hole 29 extends from the inner surface (right surface shown in FIG. 4) to the outer surface (left surface shown in FIG. 4). In addition, a body casing of the electric motor 23 is fixed to the outer surface of the lid 27. The electric motor 23 is rotatable in a forward direction and a reverse direction, that is, the first rotation direction R11 and the second rotation direction R12. The first rotation direction R11 is a clockwise direction, when viewed from the motor output shaft side, and is referred to as "CW". The second rotation direction R12 is a counterclockwise direction, when viewed from the motor output shaft, and is referred to as "CCW". For example, a brushless electric motor is employed as the electric motor 23. The body casing of the electric motor 23 is attached so as to be exposed on the outside of the housing 22. An output shaft 40 of the electric motor 23 is arranged so as to be neither parallel to nor intersecting with the shift select shaft 15 such that, when viewed from above, the output shaft 40 and the shift select shaft 15 form an angle of 90 degrees. The output shaft 40 extends in a predetermined direction (lateral direction shown in FIG. 4) perpendicular to a direction along the axial directions M11, M12. The output shaft 40 faces the inside the housing 22 via the through-hole 29 of the lid 27, and faces the switching unit 26.

As shown in FIG. 5A, the housing 22 includes a distal end-side portion (lower end-side portion shown in FIG. 5A) of the shift select shaft 15 and a substantially box-shaped main housing 22A. The main housing 22A mainly accommodates components of the shift conversion mechanism 24. The main housing 22A includes a first side wall 111, a second side wall 112, a first shaft holder 113, and a second shaft holder 114. The first shaft holder 113 supports a base end-side portion of the shift select shaft 15. The second shaft holder 114 accommodates and supports the distal end portion of the shift select shaft 15.

The inner side surface of the first side wall 111 is a first inner wall surface 111A formed of a flat surface. The inner side surface of the second side wall 112 is a second inner wall surface 112A formed of a flat surface. The second inner wall surface 112A faces the first inner wall surface 111A, and is parallel to the first inner wall surface 111A. The first shaft holder 113 is formed so as to protrude outward from the outer wall surface (surface on the opposite side of the first side wall 111 from the first inner wall surface 111A) of the first side wall 111, and is formed in, for example, a cylindrical shape. The first shaft holder 113 is integrally formed with the first side wall 111. An insertion hole 104 having a circular cross section is formed in the first shaft holder 113 and the first side wall 111. The insertion hole 104 extends through the first shaft holder 113 and the first side wall 111 in their thickness direction (up-down direction in FIG. 5A). The shift select shaft 15 is passed through the insertion hole 104.

A first plain bearing 101 is fixedly fitted onto the inner peripheral wall of the insertion hole 104. The first plain bearing 101 surrounds the outer periphery of a middle portion of the shift select shaft 15 (a portion slightly closer to the based end than the distal end portion) that is passed through the insertion hole 104, and supports the outer periphery of the middle portion of the shift select shaft 15 so as to be in sliding contact with the outer periphery of the middle portion. The second shaft holder 114 is formed so as to protrude outward from the outer wall surface (surface on the opposite side of the second side wall 112 from the second inner wall surface 12A) of the second side wall 112, and is formed in, for example, a substantially cylindrical shape. The second shaft holder 114 is integrally formed with the second side wall 112. A columnar distal end portion accommodating groove 115 (see FIG. 5A) is defined by the inner periphery and the bottom face of the second shaft holder 114. The distal end portion accommodating groove 115 accommodates the distal end portion (lower end portion in FIG. 5A) of the shift select shaft 15. The inner peripheral wall of the distal end portion accommodating groove 115 is formed in a cylindrical shape having a central axis coaxial with the cylindrical insertion hole 104.

A second plain bearing 102 is fixedly fitted onto the inner peripheral wall of the distal end portion accommodating groove 115. The second plain bearing 102 surrounds the outer periphery of the distal end portion of the shift select shaft 15 accommodated in the distal end portion accommodating groove 115, and supports the outer periphery of the distal end portion so as to be in sliding contact with the outer periphery of the distal end portion. The shift select shaft 15 is supported by the first plain bearing 101 and the second plain bearing 102 so as to be rotatable around its central axis 17 and movable in the axial directions M11, M12.

A seal member 103 is provided at a portion on the outer side of the first plain bearing 101 in the insertion hole 104 to seal the clearance between the inner peripheral wall of the insertion hole 104 and the outer periphery of the shift select shaft 15 so that dust or dirt does not enter the housing 22 (main housing 22A). A lock pole 106 is arranged in the first shaft holder 113, at a position between the seal member 103 and the first plain bearing 101 in the thickness direction (up-down direction in FIG. 5A). Specifically, the lock pole 106 is accommodated in a through-hole 105 that extends from the inner peripheral wall of the insertion hole 104 to the outer periphery of the first shaft holder 113. The lock pole 106 extends in a direction perpendicular to a direction along the central axis of the columnar distal end portion accommodating groove 115 (that is, the central axis 17 of the shift select shaft 15) (perpendicular direction), has a substantially cylindrical shape, and is provided so as to be movable along the above-described direction (perpendicular direction). The distal end portion of the lock pole 106 has a semi-spherical shape, and is engaged with one of engaging grooves 107 described below.

A plurality of (for example, three) engaging grooves 107 is formed on the outer periphery of the shift select shaft 15 at intervals in the axial directions M11, M12 so as to extend in the circumferential direction of the shift select shaft 15. Each engaging groove 107 is formed all around the shift select shaft 15. As the lock pole 106 moves in its longitudinal direction, the distal end portion protrudes toward the central axis 17 (rightward in FIG. 5A) beyond the inner peripheral wall of the insertion hole 104 to be engaged with one of the engaging grooves 107. In this way, the lock pole 106 prohibits movement of the shift select shaft 15 in the axial directions M11, M12. As a result, the shift select shaft 15 is held with a constant force with the movement in the axial directions M11, M12 prohibited.

As shown in FIG. 5A, in a portion of the outer periphery of the shift select shaft 15 between a portion which is in sliding contact with the first plain bearing 101 and a portion which is in sliding contact with the second plain bearing 102, external splines 121 and a rack 122 (described later) are formed in this order from the first plain bearing 101 side. A pinion 36 is in mesh with the rack 122. As shown in FIG. 4, the switching unit 26 includes a transmission shaft 41, a first rotor 42, a second rotor 44 and a clutch mechanism 39. The transmission shaft 41 is coaxially coupled to the output shaft 40 of the electric motor 23. The first rotor 42 is provided coaxially with the transmission shaft 41 so as to be rotatable together with the transmission shaft 41. The second rotor 44 is provided coaxially with the transmission shaft 41 so as to be rotatable together with the transmission shaft 41. The clutch mechanism 39 switches the element, to which the transmission shaft 41 is coupled, between the first rotor 42 and the second rotor 44.

The transmission shaft 41 includes a small-diameter main shaft portion 46 and a large-diameter portion 47. The main shaft portion 46 is provided on the electric motor 23 side. The large-diameter portion 47 is provided integrally with the main shaft portion 46, at an axial end portion (right end portion in FIG. 4), on the first rotor 42 side, of the main shaft portion 46, and is larger in diameter than the main shaft portion 46. The first rotor 42 is arranged on the opposite side of the transmission shaft 41 from the electric motor 23. The first rotor 42 has a first armature hub 54 that projects radially outward from the outer periphery of the axial end portion (left end portion in FIG. 4) on the electric motor 23 side. The first armature hub 54 is arranged so as to face the surface (right surface in FIG. 4) of the large-diameter portion 47, which is on the opposite side of the large diameter portion 47 from the electric motor 23.

The second rotor 44 is arranged on the opposite side of the large-diameter portion 47 of the transmission shaft 41 from the first rotor 42, that is, arranged on the electric motor 23 side. The second rotor 44 surrounds the main shaft portion 46 of the transmission shaft 41. The second rotor 44 has a second armature hub 55 that projects radially outward from the outer periphery of the axial end portion (right end portion in FIG. 4), which is on the opposite side of the second rotor 44 from the electric motor 23. The second armature hub 55 is arranged so as to face the surface (left surface in FIG. 4) of the large-diameter portion 47, which is on the electric motor 23 side. In other words, (the first armature hub 54 of) the first rotor 42 and (the second armature hub 55 of) the second rotor 44 are arranged so as to sandwich the large-diameter portion 47 of the transmission shaft 41 therebetween.

The clutch mechanism 39 includes a shift electromagnetic clutch (clutch mechanism) 43 and a select electromagnetic clutch (clutch mechanism) 45. The shift electromagnetic clutch 43 is connected to or disconnected from the first rotor 42 to couple or remove the transmission shaft 41 to or from the first rotor 42. The select electromagnetic clutch 45 is connected to or disconnected from the second rotor 44 to couple or remove the transmission shaft 41 to or from the second rotor 44. The shift electromagnetic clutch 43 includes a first field 48 and a first armature 49. The first armature 49 is arranged on the other axial side face (right surface in FIG. 4) of the large-diameter portion 47 of the transmission shaft 41 with a small clearance left between the first armature 49 and the surface, on the electric motor 23 side (left surface in FIG. 4), of the first armature hub 54, and is formed in a substantially annular plate shape. The first armature 49 is made of a ferromagnetic material, such as iron. The first field 48, in which a first electromagnetic coil 50 is incorporated in the yoke, is fixed to the housing 22.

The select electromagnetic clutch 45 includes a second field 51 and a second armature 52. The second armature 52 is arranged on one axial side face (left surface in FIG. 4) of the large-diameter portion 47 of the transmission shaft 41 with a small clearance left between the second armature 52 and the surface (right surface in FIG. 4) of the second armature hub 55, which is on the opposite side of the second armature hub 55 from the electric motor 23, and is formed in a substantially annular plate shape. The second armature 52 is made of a ferromagnetic material, such as iron. The second field 51, in which a second electromagnetic coil 53 is incorporated in the yoke, is fixed to the housing 22. The first field 48 and the second field 51 are arranged next to each other along the axial direction such that the large-diameter portion 47, the first armature hub 54 and the second armature hub 55 are interposed between the first field 48 and the second field 51.

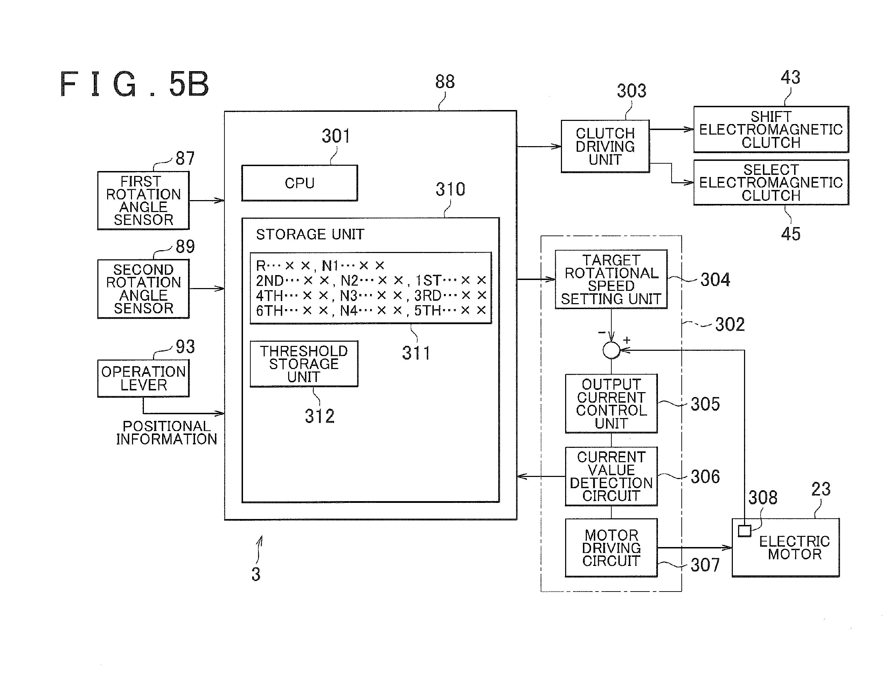

A clutch driving unit 303 (described later, see FIG. 5B) which is formed of a relay circuit and used to drive the shift and select electromagnetic clutches 43 and 45 is connected thereto. The clutch driving unit 303 is supplied with voltage (supplied with electric power) from a power supply (for example, 24 V, not shown) via, for example, a wiring. When the first electromagnetic coil 50 is energized by supplying electric power to the shift electromagnetic clutch 43 through the clutch driving unit 303, the first electromagnetic coil 50 enters an excited state. Thus, electromagnetic attraction force is generated in the first field 48 that includes the first electromagnetic coil 50. Then, the first armature 49 is attracted to the first field 48 to be deformed toward the first field 48 As a result, the first armature 49 frictionally contacts the first armature hub 54. Thus, as the first electromagnetic coil 50 is energized, the first electromagnetic coil 50 is connected (coupled) to the first rotor 42, and the transmission shaft 41 is coupled to the first rotor 42. Then, supply of voltage to the first electromagnetic coil 50 is stopped and current does not flow through the first electromagnetic coil 50. Thus, attraction force for attracting the first armature 49 is no longer generated, so the first armature 49 returns to an original shape. Thus, the first electromagnetic coil 50 separates from the first rotor 42, and the transmission shaft 41 is removed from the first rotor 42. That is, by switching the state of power supply to the first electromagnetic coil 50 between the power supply state and the power supply stopped state, it is possible to allow or interrupt transmission of rotary torque from the electric motor 23 to the first rotor 42.

On the other hand, as the second electromagnetic coil 53 is energized by supplying electric power to the select electromagnetic clutch 45 via the clutch driving unit 303, the second electromagnetic coil 53 is placed in an excited state. Thus, electromagnetic attraction force is generated in the second field 51 that includes the second electromagnetic coil 53. Then, the second armature 52 is attracted to the second field 51 to be deformed toward the second field 51. As a result, the second armature 52 frictionally contacts the second armature hub 55. Thus, as the second electromagnetic coil 53 is energized, the second electromagnetic coil 53 is connected (coupled) to the second rotor 44, and the transmission shaft 41 is coupled to the second rotor 44. Then, supply of voltage to the second electromagnetic coil 53 is stopped and current does not flow through the second electromagnetic coil 53. Thus, attraction force for attracting the second armature 52 is no longer generated, and the second armature 52 returns to an original shape. Thus, the second electromagnetic coil 53 separates from the second rotor 44, and the transmission shaft 41 is removed from the second rotor 44. That is, by switching the state of power supply to the second electromagnetic coil 53 between the power supply state and the power supply stopped state, it is possible to allow or interrupt transmission of rotary torque from the electric motor 23 to the second rotor 44.

An annular small-diameter first gear 56 is fixedly fitted onto the outer periphery of the second rotor 44. The first gear 56 is provided coaxially with the second rotor 44. The first gear 56 is supported by a rolling bearing 57. An outer ring of the rolling bearing 57 is fixedly fitted onto the inner periphery of the first gear 56. An inner ring of the rolling bearing 57 is fixedly fitted onto the outer periphery of the main shaft portion 46 of the transmission shaft 41. The shift conversion mechanism 24 includes a ball screw mechanism 58 and an arm 60. The ball screw mechanism 58 is a speed reducer that converts a rotational motion into a linear motion. The arm 60 pivots about the central axis 17 of the shift select shaft 15 as a nut 59 of the ball screw mechanism 58 moves in the axial direction.

The ball screw mechanism 58 includes a screw shaft 61 and the nut 59. The screw shaft 61 extends coaxially with the first rotor 42 (that is, coaxially with the transmission shaft 41). The nut 59 is screwed to the screw shaft 61 via balls (not shown). The screw shaft 61 is arranged so as to be neither parallel to nor intersecting with the shift select shaft 15 such that, when viewed from above, the screw shaft 61 and the shift select shaft 15 form an angle of 90°. In other words, when viewed from a direction perpendicular to both the axial directions of the screw shaft 61 and the axial directions M11, M12 of the shift select shaft 15, the screw shaft 61 and the shift select shaft 15 are perpendicular to each other.

The screw shaft 61 is supported by rolling bearings 64, 67 while movement of the screw shaft 61 in the axial directions is restricted. Specifically, one end portion (left end portion in FIG. 4) of the screw shaft 61 is supported by the rolling bearing 64, and the other end portion (right end portion in FIG. 4) of the screw shaft 61 is supported by the rolling bearing 67. The screw shaft 61 is supported by the rolling bearings 64, 67 so as to be rotatable about its axis (central axis 80).

An inner ring of the rolling bearing 64 is fixedly fitted onto one end portion of the screw shaft 61. In addition, an outer ring of the rolling bearing 64 is fitted into a through-hole that passes through a bottom wall 65 of the casing of the switching unit 26 fixed to the housing 22, so as to extend from the inner surface to the outer surface of the bottom wall 65. In addition, a lock nut 66 is engaged with the outer ring of the rolling bearing 64 to restrict movement of the rolling bearing 64 toward the other side in the axial direction of the screw shaft 61 (rightward in FIG. 4). A part of one end portion of the screw shaft 61, which is on the electric motor 23 side (left side in FIG. 4) with respect to the rolling bearing 64, is passed through the inner periphery of the first rotor 42, and is coupled to the first rotor 42 so as to be rotatable together with the first rotor 42. The outer ring of the rolling bearing 67 is fixed to the housing 22.

Columnar protruding shafts 70 are formed to protrude from one side surface of the nut 59 and the other side surface that is on the opposite side of the nut 59 from the one side surface. The protruding shafts 70 extend in the direction along the axial directions M11, M12 of the shift select shaft 15. The one side surface is a side surface closer to the reader in the direction perpendicular to the sheet on which FIG. 4 is drawn, and is a lower side surface in FIG. 5A. The other side surface is a side surface farther from the reader in the direction perpendicular to the sheet on which FIG. 4 is drawn, and is an upper side surface in FIG. 5A. The direction along the axial directions M11, M12 is the direction perpendicular to the sheet on which FIG. 4 is drawn, and is the up-down direction in FIG. 5A. Only one of the protruding shafts 70 is shown in FIG. 4 (also see FIG. 5A). The protruding shafts 70 are coaxial with each other. The rotation of the nut 59 about the screw shaft 61 is restricted by the first engaging portion 72 of the arm 60. Thus, as the screw shaft 61 is rotated, the nut 59 moves in the axial direction of the screw shaft 61 in accordance with the rotation of the screw shaft 61. Note that FIG. 5A shows a sectional state where the nut 59 is located at a position that is deviated from the position of the nut 59 shown in FIG. 4 in a direction away from the first rotor 42 (rightward in FIG. 4) along the axial direction of the screw shaft 61.

The arm 60 includes the first engaging portion 72, a second engaging portion 73 (see FIG. 5A) and a linear connecting rod 74. The first engaging portion 72 is engaged with the nut 59. The second engaging portion 73 is spline-fitted to the shift select shaft 15. The connecting rod 74 connects the first engaging portion 72 to the second engaging portion 73. The connecting rod 74 has, for example, a rectangular shape in cross section over its entire length. The second engaging portion 73 has a substantially cylindrical shape, and is fitted onto the shift select shaft 15.

The first engaging portion 72 has a pair of support plate portions 76 and a coupling plate portion 77. The support plate portions 76 face each other. The coupling plate portion 77 couples the base end sides (lower end sides shown in FIG. 4 and right end sides shown in FIG. 5A) of the support plate portions 76. The first engaging portion 72 has a substantially U-shape in side view. Each support plate portion 76 has a U-shaped engaging groove 78. The U-shaped engaging groove 78 is engaged with the outer periphery of a corresponding one of the protruding shafts 70 while allowing rotation of the corresponding one of the protruding shafts 70. Each U-shaped engaging groove 78 is a cutout that extends from the distal end side that is on the opposite side of the first engaging portion 72 from the base end side. Therefore, the first engaging portion 72 is engaged with the nut 59 so as to be rotatable relative to the nut 59 around the protruding shafts 70 and movable together with the nut 59 in the axial direction of the screw shaft 61. In addition, due to engagement of each U-shaped engaging groove 78 and a corresponding one of the protruding shafts 70, rotation of the nut 59 around the screw shaft 61 is restricted by the first engaging portion 72 of the arm 60. Therefore, in accordance with the rotation of the screw shaft 61, the nut 59 and the first engaging portion 72 move in the axial direction of the screw shaft 61. The second engaging portion 73 has, for example, an annular plate shape. Alternatively, the second engaging portion 73 may have a cylindrical shape.

The outer periphery of the shift select shaft 15 is spline-fitted to the inner periphery of the second engaging portion 73. Specifically, external splines 121 formed on the outer periphery of the shift select shaft 15 are in mesh with internal splines 75 formed in the inner periphery of the second engaging portion 73. At this time, a clearance for meshing is formed between the external splines 121 and the internal splines 75. In other words, the second engaging portion 73 is coupled to the outer periphery of the shift select shaft 15 so as to be non-rotatable relative to the shift select shaft 15 and movable relative to the shift select shaft 15 in the axial direction. Therefore, as the screw shaft 61 rotates and, accordingly, the nut 59 moves in the axial direction of the screw shaft 61, the arm 60 pivots about the central axis 17 of the shift select shaft 15, and the shift select shaft 15 rotates in accordance with the pivot motion of the arm 60.

The select conversion mechanism 25 includes the first gear 56, a pinion shaft 95, a second gear 81 and the small-diameter pinion 36. The pinion shaft 95 extends parallel to the transmission shaft 41, and is provided so as to be rotatable. The second gear 81 is coaxially fixed to the pinion shaft 95 at a predetermined position close to one end portion (left end portion in FIG. 4) of the pinion shaft 95. The small-diameter pinion 36 is coaxially fixed to the pinion shaft 95 at a predetermined position close to the other end portion (right end portion in FIG. 4) of the pinion shaft 95. The select conversion mechanism 25 constitutes a speed reducer as a whole. Note that the second gear 81 is formed to be larger in diameter than both the first gear 56 and the pinion 36.

One end portion (left end portion in FIG. 4) of the pinion shaft 95 is supported by a rolling bearing 96 fixed to the housing 22. An inner ring of the rolling bearing 96 is fixedly fitted onto one end portion (left end portion in FIG. 4) of the pinion shaft 95. In addition, the outer ring of the rolling bearing 96 is fixed in a cylindrical recess 97 formed on the inner surface of the lid 27. In addition, the other end portion (right end portion in FIG. 4) of the pinion shaft 95 is supported by a rolling bearing 84. The pinion 36 and the rack 122 are in mesh with each other through rack-and-pinion. With this configuration, as the pinion shaft 95 rotates in accordance with the rotation of the transmission shaft 41, the shift select shaft 15 moves in the axial directions M11, M12 accordingly.

A first rotation angle sensor 87 is arranged at the other end portion (right end portion in FIG. 4) of the pinion shaft 95. The first rotation angle sensor 87 is used to detect the rotation angle of the pinion shaft 95. A sensor hole 85 is formed in the bottom wall (the wall on the opposite side of the housing 22 from the lid 27; right wall in FIG. 4) of the housing 22, and passes through the bottom wall from the inner face to the outer face. The first rotation angle sensor 87 includes a sensor portion (not shown) and a first sensor shaft 99 that is coupled to the sensor portion. The distal end portion of the first sensor shaft 99 is coupled to the other end portion 82 of the pinion shaft 95 through the sensor hole 85 so as to be rotatable together with the pinion shaft 95. As the pinion shaft 95 rotates, the first sensor shaft 99 rotates about its axis in accordance with the pinion shaft 95. The first rotation angle sensor 87 calculates the rotation angle of the pinion shaft 95 on the basis of the rotation angle of the first sensor shaft 99.

In addition, a second rotation angle sensor (shaft rotation detecting means) 89 for detecting the rotation angle of the shift select shaft 15 is provided in the housing 22. The second rotation angle sensor 89 includes a body 90, a second sensor shaft 94 and a sector gear 91. A sensor portion (not shown) is incorporated in the body 90. The second sensor shaft 94 is coupled to the sensor portion of the body 90 so as to be rotatable integrally with the sensor portion. The sector gear 91 is fixedly fitted onto the second sensor shaft 94. The sector gear 91 is in mesh with a sensor gear 92 that is provided so as to be rotatable together with (fixedly fitted onto) the shift select shaft 15. As the shift select shaft 15 rotates about its axis, the sensor gear 92 and the sector gear 91 rotate together with the shift select shaft 15, and, accordingly, the second sensor shaft 94 rotates about its axis. The second rotation angle sensor 89 detects the rotation angle of the shift select shaft 15 on the basis of the rotation angle of the second sensor shaft 94.

FIG. 5B is a block diagram that shows the electrical configuration of the transmission actuating device 3. The transmission actuating device 3 includes a control unit 88. An electronic control unit (ECU) is an example of the control unit 88. The control unit 88 includes a microcomputer that includes a CPU 301 and a storage unit 310. The shift electromagnetic clutch 43 and the select electromagnetic clutch 45 are connected, as control targets, to the control unit 88 via the clutch driving unit 303. The control unit 88 executes drive control over the control targets in accordance with a prestored program.

The detection results (for example, detected voltages) output from the first rotation angle sensor 87 and second rotation angle sensor 89 are input into the control unit 88. The positional information of an operation lever 93 for gear shift operation of the vehicle is input into the control unit 88. Furthermore, the detection result output from a current value detection circuit 306 described below is input into the control unit 88.

The storage unit 310 is included in the control unit 88. The storage unit 310 includes a positional data storage unit (positional information storage means) 311 and a threshold storage unit 312. The positional data storage unit 311 stores positional data (positional information) of the shift positions and neutral positions of the distal end portion 16b of the internal lever 16. The threshold storage unit 312 stores thresholds of supplied current values when the internal lever 16 is pushed against the inner walls 200A of the engaging grooves 14A to 14D. The current value detection circuit 306 and the threshold storage unit 312 constitute torque detecting means according to the invention.

The positional data storage unit 311 is formed of a rewritable memory. In addition, the position of the distal end portion 16b of the internal lever 16 is specified by positional data on the shift direction and positional data on the select direction. Thus, positional data on the shift direction and positional data on the select direction are stored in the positional data storage unit 311, for each of the reverse-gear shift position, the first-gear shift position, the second-gear shift position, the third-gear shift position, the fourth-gear shift position, the fifth-gear shift position, the sixth-gear shift position, the first neutral position N1, the second neutral position N2, the third neutral position N3 and the fourth neutral position N4 shown in FIG. 2.

The CPU (positional information setting correction means) 301 is able to obtain the axial position of the shift select shaft 15 on the basis of the detection result output from the first rotation angle sensor 87. Thus, it is possible to obtain the position of the distal end portion 16b of the internal lever 16 in the select direction. In addition, the CPU 301 is able to obtain the rotation angle of the shift select shaft 15 on the basis of the detection result output from the second rotation angle sensor 89. Thus, it is possible to obtain the position of the distal end portion 16b of the internal lever 16 in the select direction.

The CPU 301 determines operations of the electric motor 23, shift electromagnetic clutch 43 and select electromagnetic clutch 45 on the basis of the positional data of the shift positions and neutral positions N1, N2, N3, N4 of the distal end portion 16b, stored in the positional data storage unit 311. In other words, the CPU 301 controls a shift operation and a select operation of the internal lever 16 on the basis of the positional data stored in the positional data storage unit 311.

A motor driving unit 302 includes a target rotational speed setting unit 304, an output current control unit 305 and a motor driving circuit 307. The target rotational speed setting unit 304 sets (determines) the target rotational speed of the rotor portion of the electric motor 23 on the basis of the operations determined by the CPU 301. The output current control unit 305 controls an output current such that the rotational speed of the rotor portion of the electric motor 23 becomes the target value. The motor driving circuit 307 drives the electric motor 23 by, for example, pulse width modulation (PWM) control. The rotational speed of the electric motor 23 is detected by a motor rotational speed detecting unit 308 formed of a resolver, a rotary encoder, or the like. The rotational speed detected by the motor rotational speed detecting unit 308 is fed back, and the value of supplied current is controlled by the output current control unit 305. In the motor driving unit 302, the current value of current that is supplied to the motor driving circuit 307 is detected by the current value detection circuit 306. The detection result output from the current value detection circuit 306 is input into the control unit 88.

The control unit 88 obtains the rotation angular amount of the shift select shaft 15 on the basis of the detection result output from the second rotation angle sensor 89 when the shift select shaft 15 rotates although a shift operation is not performed. Thus, it is possible to detect a displacement of the distal end portion 16b of the internal lever 16 due to a inverse input. Hereinafter, description will be made on the case of downshifting from first gear to reverse gear.

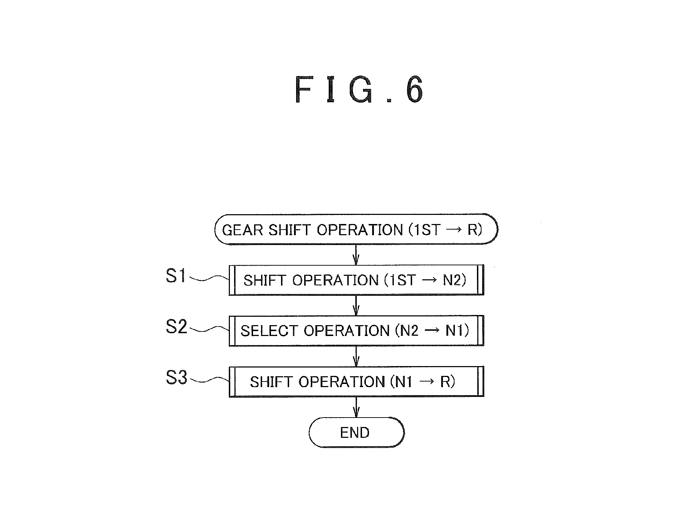

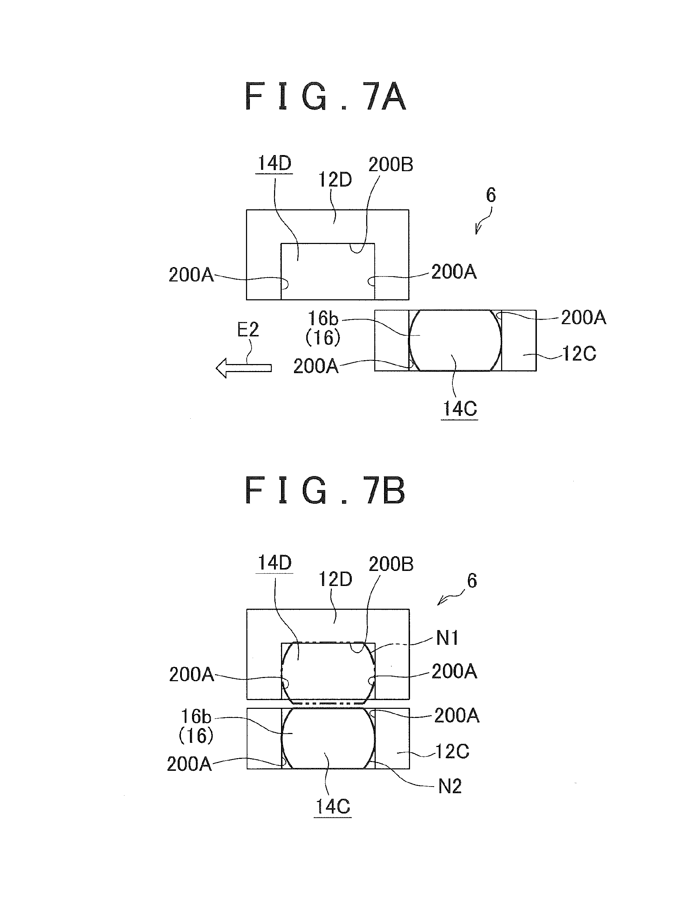

FIG. 6 is a flowchart that shows gear shift operation control for downshifting from first gear to reverse gear. In addition, FIG. 7A to FIG. 7D are views that show states of engagement between the internal lever 16 and the shift heads 12A, 12B in the case of downshifting from first gear to reverse gear. Operation control for downshifting from first gear to reverse gear will be described with reference to FIG. 6 and FIG. 7A to FIG. 7D.

As shown in FIG. 6, when downshifting from first gear to reverse gear is performed, a shift operation (1st → N2) (step S1), a select operation (N2 → N1) (step S2) and a shift operation (N1 → R) (step S3) are performed in this order. Specifically, in the shift operation (1st → N2) in step S1, the electric actuator 21 is driven to pivot the internal lever 16 in the rotation direction R2 about the shift select shaft 15. Thus, the shift head 12B and the fork shaft 10B are moved in the axial direction M3 (in the direction of the outline arrow E2 in FIG. 7A), and the distal end portion 16b of the internal lever 16 is located at the second neutral position N2 (see FIG. 7B).

Then, in the select operation (N2 → N1) in step S2, the electric actuator 21 is driven to move the shift select shaft 15 in its axial direction M11 (the direction of the outline arrow D1 in FIG. 2). Thus, the internal lever 16 is moved in the axial direction M11, separated from the shift head 12B, and engaged with the shift head 12A (the internal lever 16 is located at the first neutral position N1). Then, in the shift operation (N1 → R) in step S3, the electric actuator 21 is driven to pivot the internal lever 16 in the rotation direction R2 about the shift select shaft 15. Thus, the shift head 12A and the fork shaft 10A are moved in the axial direction M1 (the direction of the outline arrow ER in FIG. 2). The electric actuator 21 is continuously driven until the distal end portion 16b of the internal lever 16 reaches the reverse-gear shift position. Thus, gearshift to reverse gear is completed.

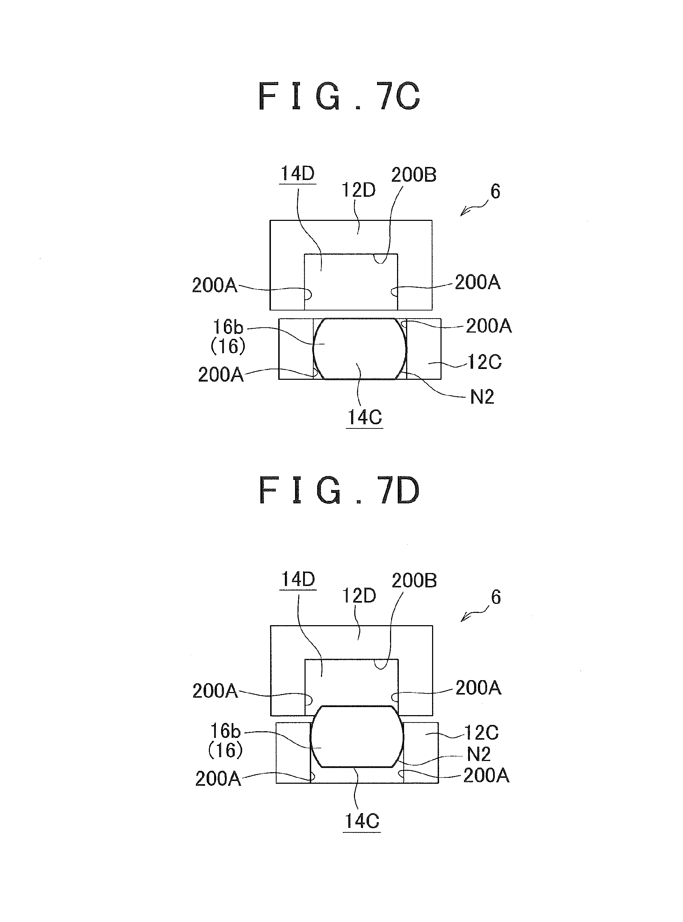

As described above, when the shift heads 12A, 12B, 12C, 12D are in the neutral positions N1, N2, N3, N4, the shift heads 12A, 12B, 12C, 12D are at the same position in the axial directions M1, M3, M5, M7. However, one or more of the neutral positions N1, N2, N3, N4 of the shift heads 12A to 12D may deviate from the predetermined positions due to factors, such as temperature changes and aged deterioration. For example, as shown in FIG. 7C, when the neutral position N1 of the shift head 12A deviates from the predetermined position, the shift head 12A deviates from (is not at the same position as) the other shift heads 12B, 12C, 12D in a neutral state in the axial directions M1, M3, M5, M7. If the deviation amount is not so large, although strong uneven contact force acts on the internal lever 16 and the shift head 12A, it is possible to move the internal lever 16 from the second neutral position N2 toward the first neutral position N1 (to cause the internal lever 16 to perform select operation), as shown in FIG. 7D.

However, in this case, because the distal end portion 16b of the internal lever 16 is engaged with the shift head 12A of which the first neutral position N1 deviates from the predetermined position, the internal lever 16 also deviates from the predetermined first neutral position N1. Although the internal lever 16 and the shift head 12A deviate from the first neutral position N1, the control unit 88 regards the internal lever 16 and the shift head 12A as being located at the predetermined first neutral position N1, that is, the position corresponding to the positional data of the first neutral position N1, stored in the positional data storage unit 311. Therefore, if the control unit 88 moves the distal end portion 16b of the internal lever 16 toward the reverse-gear shift position on the basis of the positional data of the reverse-gear shift position, stored in the positional data storage unit 311, the distal end portion 16b after being moved (after a shift operation) may not reach the reverse-gear shift position or may pass through the reverse-gear shift position. In the case shown in FIG. 7C, the shift head 12A in neutral deviates from the predetermined first neutral position N1 in the axial direction M1, so the distal end portion 16b after a shift operation may pass through the reverse-gear shift position.

According to the present embodiment, at the time of a gear shift operation that includes a select operation, a displacement of the distal end portion 16b in the shift direction (a rotational displacement of the shift select shaft 15) due to inverse input into the internal lever 16 during a select operation is obtained, and the positional data, and the like, of a shift position that should be reached by the gearshift are corrected on the basis of the displacement at the time of a shift operation after the select operation.

Hereinafter, description will be made on the case of downshifting from first gear to reverse gear, that is, the case where the shift position that should be reached by the gearshift is the reverse-gear shift position. Specifically, at the time of a select operation (N2 → N1), a displacement of the distal end portion 16b of the internal lever 16 in the shift direction (a rotational displacement of the shift select shaft 15) during the select operation (N2 → N1) is obtained, and the positional data of the reverse-gear shift position and first neutral position N1 are corrected at the time of a shift operation (N1 → R) on the basis of the displacement.

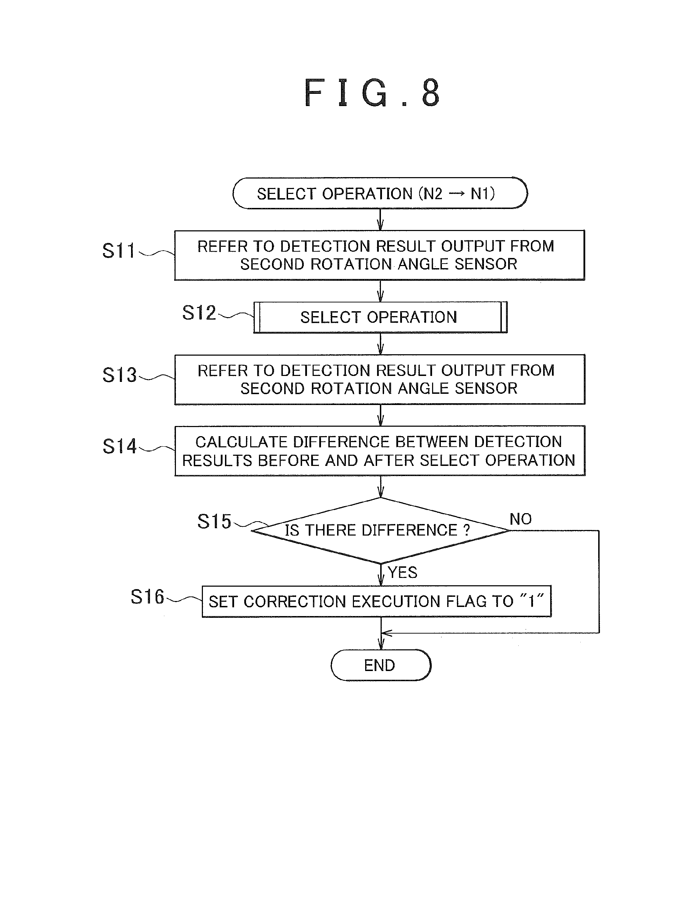

FIG. 8 is a flowchart that shows gear shift operation control over a select operation (N2 → N1). Before a select operation (N2 → N1) is performed, the control unit 88 refers to the detection result output from the second rotation angle sensor 89 (step S11). After that, the select operation (N2 → N1) is executed (step S12). In the select operation (N2 → N1), the control unit 88 rotates the electric motor 23 in the rotation direction R11 by a predetermined rotation amount while the select electromagnetic clutch 45 is engaged and the shift electromagnetic clutch 43 is disengaged. A rotation amount of the electric motor 23 at this time is determined in accordance with the positional data of the second neutral position N2 and first neutral position N1 (positional data on the select direction), stored in the positional data storage unit 311. After the electric motor 23 is rotated by the determined rotation amount, the control unit 88 stops the rotation of the electric motor 23. In this way, the select operation (N2 → N1) is completed. After completion of the select operation (N2 → N1), the control unit 88 refers to the detection result output from the second rotation angle sensor 89 (step S13).

The control unit 88 calculates a difference between the detection results before and after the select operation (step S14). When there is a difference between the detection results (YES in step S 15), the control unit 88 sets the value of a correction execution flag, stored in the storage unit 310, to "1" (step S16). On the other hand, when there is no difference between the detection results (NO in step S 15), the value of the correction execution flag stored in the storage unit 310 is not updated, and, for example, remains at "0". After that, the select operation (N2 → N1) is completed.

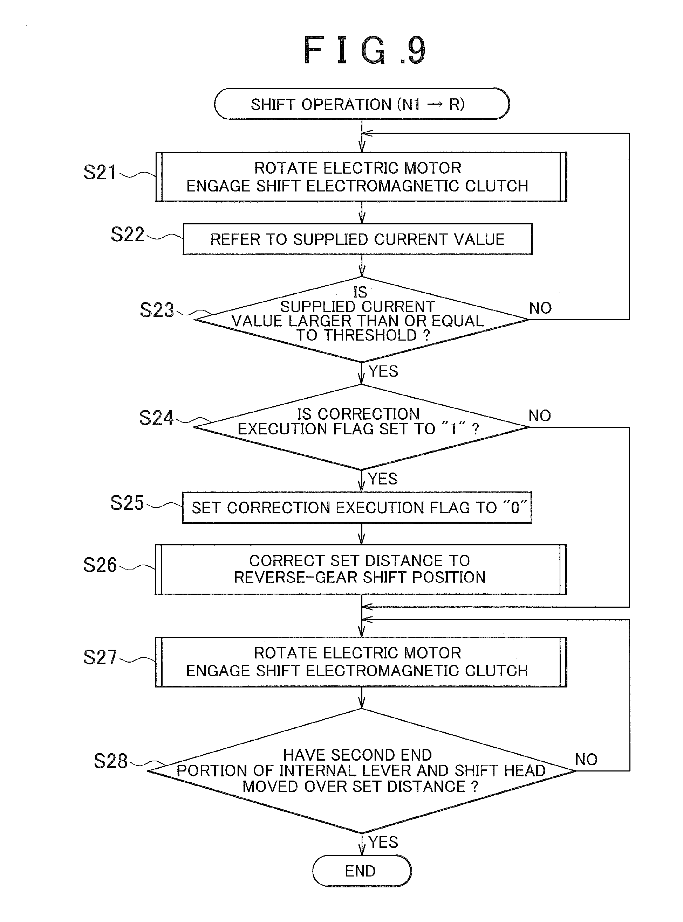

FIG. 9 is a flowchart that shows gear shift operation control over a shift operation (N1 → R). During a shift operation, in order to push the internal lever 16 against the inner walls 200A of the shift head 12A, the control unit 88 rotates the electric motor 23 in the rotation direction R11 or R12 while the shift electromagnetic clutch 43 is engaged and the select electromagnetic clutch 45 is disengaged. After a while, the control unit 88 stops the rotation of the electric motor 23 (step S21).

At this time, if the internal lever 16 and the shift head 12A are completely engaged with each other, the distal end portion 16b of the internal lever 16 is pushed against the inner walls 200A of the shift head 12A. In process of pushing the internal lever 16 against the inner walls 200A, the amount of torque that acts on the internal lever 16 rapidly increases and, accordingly, the amount of load torque that acts on the electric motor 23 rapidly increases. At this time, as the amount of load torque that acts on the electric motor 23 increases, the value of the supplied current increases. Therefore, the control unit 88 is able to detect the state of engagement of the internal lever 16 with the inner walls 200A of the shift head 12A on the basis of an increase in the value of the current supplied to the electric motor 23.

While the electric motor 23 is being rotated, the control unit 88 (CPU 301) refers to the supplied current value with the use of the current value detection circuit 306 (step S22). At this time, the supplied current value becomes larger than or equal to the threshold stored in the threshold storage unit 312 (YES in step 23). Thus, the internal lever 16 is pushed against the inner walls 200A of the shift head 12A. That is, it is possible to detect that the internal lever 16 and the shift head 12A are completely engaged with each other. On the other hand, when the supplied current value is smaller than the threshold stored in the threshold storage unit 312 (NO in step S23), step S21 and step S22 are repeated until the supplied current value becomes larger than or equal to the threshold (YES in step S23).

After the supplied current value becomes larger than or equal to the threshold (YES in step S23), operation varies depending on the value of the correction execution flag (not shown). That is, when the value of the correction execution flag is "1" (YES in step S24), after the correction execution flag is returned to "0", the positional data of the reverse-gear shift position and first neutral position N1 in the shift direction, stored in the positional data storage unit 311, are rewritten to positional data set by taking into account the deviation of the first neutral position N1 of the shift head 12A. Therefore, the corrected positional data of the reverse-gear shift position, stored in the positional data storage unit 311, is positional data with reference to the first neutral position N1 that is at the same position as the neutral positions N2, N3, N4 of the other shift heads 12B, 12C, 12D in the axial directions M1, M3, M5, M7. In addition, the corrected positional data of the first neutral position N1, stored in the positional data storage unit 311, is positional data of the first neutral position N1 that is at the same position as the neutral positions N2, N3, N4 of the other shift heads 12B, 12C, 12D in the axial directions M1, M3, M5, M7.

After that, the rotation of the electric motor 23 is continued, the distal end portion 16b of the internal lever 16 and the shift head 12A are moved in accordance with the corrected positional data (positional data in the shift direction) of the first neutral position N1 and reverse-gear shift position, stored in the positional data storage unit 311 (YES in step S28), and then the rotation of the electric motor 23 is stopped. Thus, through a select operation of the internal lever 16, the distal end portion 16b of the internal lever 16 is moved from the shift head 12B at the second neutral position N2 toward the shift head 12A at the first neutral position N1. At this time, if the first neutral position N1 of the shift head 12A to which the distal end portion 16b is moved deviates from the predetermined position, in accordance with the select operation of the distal end portion 16b, inverse input having a magnitude corresponding to the deviation amount of the shift head 12A acts on the distal end portion 16b. As a result, the shift select shaft 15 rotates. Therefore, the deviation amount of the shift head 12A (at the first neutral position N1) corresponds to a rotation angular amount of the shift select shaft 15 due to the inverse input. In addition, the rotation angle of the shift select shaft 15 is detected by the second rotation angle sensor 89.

On the basis of the rotation angular amount of the shift select shaft 15 during a select operation, it is possible to correct the set positional information of the reverse-gear shift position and the set positional information of the first neutral position N1 such that the set reverse-gear shift position and the set first neutral position N1 respectively become the predetermined reverse-gear shift position and the predetermined first neutral position N1. Thus, even when there occurs a deviation in the first neutral position N1 of the shift head 12A, it is possible to correct the positional data of the reverse-gear shift position and the positional data of the first neutral position N1, stored in the positional data storage unit 311, on the basis of the deviation amount. Therefore, it is possible to appropriately perform a shift operation thereafter.

In addition, it is possible to detect the state where the internal lever 16 is pushed against the inner walls 200A of the engaging groove 14A on the basis of a change in the amount of load torque on the electric motor 23. With reference to the position of the internal lever 16 at this time, it is possible to correct the set positional information of the reverse-gear shift position and the set positional information of the first neutral position N1. It is possible to easily and highly accurately detect the state where the internal lever 16 is pushed against the inner walls 200A of the engaging groove 14A. Thus, it is possible to appropriately correct the positional information of the reverse-gear shift position and the positional information of the first neutral position N1.

The embodiment of the invention has been described above. However, the invention may be implemented in various other embodiments. For example, in the above-described embodiment, the description is made on the example in which the positional data of the internal lever 16 is corrected in the case of downshifting from first gear to reverse gear. Alternatively, the positional data of the internal lever 16 according to the invention may be corrected also in the case of upshifting from reverse gear to first gear. In this case, when a select operation (N1 → N2) is performed, a displacement of the distal end portion 16b of the internal lever 16 in the shift direction during the select operation (N1 → N2) is obtained. Then, the positional data of the first-gear shift position, second-gear shift position and second neutral position N2 are corrected at the time of a shift operation (N2 → 1 st) on the basis of the displacement.

In addition, the invention may also be applied to shifting between second gear and third gear. In the case of downshifting from third gear to second gear, when a select operation (N3 → N2) is performed, a displacement of the distal end portion 16b of the internal lever 16 in the shift direction during the select operation (N3 → N2) is obtained, and the positional data of the first-gear shift position, second-gear shift position and second neutral position N2 are corrected at the time of a shift operation (N2 → 2nd) on the basis of the displacement. In the case of upshifting from second gear to third gear, when a select operation (N2 → N3) is performed, a displacement of the distal end portion 16b of the internal lever 16 in the shift direction during the select operation (N2 → N3) is obtained, and the positional data of the third-gear shift position, fourth-gear shift position and third neutral position N3 are corrected at the time of a shift operation (N3 → 3rd) on the basis of the displacement.

Furthermore, the invention may also be applied to shifting between fourth gear and fifth gear. In the case of downshifting from fifth gear to fourth gear, when a select operation (N4 → N3) is performed, a displacement of the distal end portion 16b of the internal lever 16 in the shift direction during the select operation (N4 → N3) is obtained, and the positional data of the third-gear shift position, fourth-gear shift position and third neutral position N3 are corrected at the time of a shift operation (N3 → 4th) on the basis of the displacement. In addition, in the case of upshifting from fourth gear to fifth gear, when a select operation (N3 → N4) is performed, a displacement of the distal end portion 16b of the internal lever 16 in the shift direction during the select operation (N3 → N4) is obtained, and the positional data of the fifth-gear shift position, sixth-gear shift position and fourth neutral position N4 are corrected at the time of a shift operation (N4 → 5th) on the basis of the displacement.

Note that the description is made on the example in which the positional data of the shift positions and neutral positions are used as the positional information of the internal lever 16 to be corrected. Alternatively, moving distance data from the neutral positions N1, N2, N3, N4 to the predetermined shift positions may be stored and then the moving distance data may be corrected. In addition, for example, of course, other arrangements of the shift positions may be employed. As a matter of course, in accordance with the arrangement of the shift positions, the number of the shift heads 12A to 12D may be changed.

Other than the above, various design changes may be made within the scope of the matter recited in the claims.

## Claims

1. A transmission actuating device that actuates a transmission that includes a plurality of fork shafts and shift heads fixed to the respective fork shafts, comprising:
a shift select shaft that is a columnar member to which a shift lever that is engaged with any one of the shift heads is coupled, that rotates about an axis of the shift select shaft to cause the shift lever to perform a shift operation, and that moves in an axial direction of the shift select shaft to cause the shift lever to perform a select operation;
a single electric motor that generates rotational driving force;
a shift driving mechanism that rotates the shift select shaft about the axis upon receiving the rotational driving force from the electric motor;
a select driving mechanism that moves the shift select shaft in the axial direction upon receiving the rotational driving force from the electric motor;
a clutch mechanism that selectively changes a member, to which the rotational driving force from the electric motor is transmitted, between the shift driving mechanism and the select driving mechanism;
shaft rotation detecting means for detecting a rotation angle of the shift select shaft;
positional information storage means for storing positional information at the time when the shift lever is engaged with each of the shift heads in association with a corresponding one of the shift heads; and
positional information setting correction means for correcting the set positional information corresponding to each shift head, which is stored in the positional information storage means, based on a rotation angular amount of the shift select shaft during driving of the select driving mechanism.

2. The transmission actuating device according to claim 1, wherein:
the transmission has an engaging groove that is formed over the plurality of shift heads, that accommodates at least part of the shift lever, and that is engaged with the shift lever;
the transmission actuating device further includes torque detecting means for detecting a torque that acts on the shift lever; and
the positional information setting correction means corrects the set positional information using, as a reference, a position of the shift lever at the time when a torque higher than or equal to a predetermined magnitude acts on the shift lever.
